# EUROPEAN PATENT APPLICATION

(11) **EP 2 645 684 A1**
(43) Date of publication of application: **02.10.2013**
(21) Application number: 12162747.5
(22) Date of filing: 30.03.2012
(51) Int. Cl.: H04M 1/60, H04M 1/22

(54) **Apparatus, and associated method, for controlling volumetric output level of a handset receiver**

(71) Applicant: BlackBerry Limited, Waterloo ON N2L 3W8 (CA)
(72) Inventor: Moquin, Philippe Gilbert Jacques Joseph, Ottawa, Ontario K2K 3K1 (CA); Hansson, Per Magnus Fredrik, Waterloo, Ontario N2L 3W8 (CA); Shirzadi, Farhoud, Waterloo, Ontario N2L 3W8 (CA); Edgar, Robbie Donald, Waterloo, Ontario N2L 3W8 (CA); Allen, Luke Stephen, Waterloo, Ontario N2L 3W8 (CA)
(74) Representative: Greenaway, Martin William

(57) **Abstract**

An apparatus, and an associated method, provides for operation of a handset receiver at a volumetric output level of either a hands free mode of operation or a handset mode of operation. A noncontact proximity sensor detects proximity of the handset to a user. If the sensed proximity indicates that the handset is positioned proximate to the user, the maximum volumetric output level is constrained to be no greater than a maximum handset mode of operation level. If the sensed proximity is greater than a minimum distance, high volumetric output levels are permitted of the handset receiver.

## Description

The present disclosure relates generally to a manner by which to select the volumetric output level of a handset receiver, such as the receiver transducer of a wireless device. More particularly, the present disclosure relates to an apparatus, and an associated method, by which to operate the handset receiver in either a handset mode or a hands free mode, depending upon the position of the handset relative to a user of the handset.

When the user is positioned in proximity to the handset, such as when the handset is positioned close to the user's ear, the maximum volumetric output level is constrained, and the receiver is operated in a handset mode. When the user is not positioned in proximity to the handset, the handset is permitted to be operated in the hands free mode. A single acoustic transducer is used, when operating the handset in either of the hands free and handset modes.

### Background

Recent years have been witnessed to significant changes in modern society permitted as a result of advancements in communication technologies. Such advancements have permitted existing types of communication systems to exhibit improved performance capabilities. And, new types of communication systems have also been introduced that provide new types of communication services, many at affordable prices. Communication systems and the devices operable therein are readily accessible to many at affordable cost to carry out many different types of communication services.

Telephonic communication systems are exemplary of communication systems in which technological advancements have been implemented. Networks of various telephonic communication systems have constructed and deployed to encompass significant portions of the populated areas of the world. Various of such communication networks are interconnected and provide for communications between parties positioned at disparate locations. And, interworking between different types of communication systems permits communication between communication devices. The internet, for instance, provides connectivity at many of the populated areas of the world. Likewise, telephonic networks and cellular communication networks have also been installed to encompass significant portions of the populated areas of the world. Interworking between the networks of the different systems permits devices operable in one system to communication with devices operable in other systems.

The use of cellular, and other radio, communication systems through which to communicate telephonically obviates the need to make a physical connection by which to form a communication path to provide for the telephonic communications at a communication endpoint. Rather, a telephonic device operable in a radio communication system comprises a wireless device having radio transceiver circuitry capable of communicating by way of radio channels with corresponding transceiver circuitry of the radio communication network. The wireless device can be used to communicate, if granted access to the communication network, at any location within the coverage area of the communication network. Such devices, referred to as wireless devices, are often times of small physical dimensions, permitting their easy hand carriage and storage, such as in a shirt pocket or purse, when not used.

Significant efforts have made to miniaturize the components of wireless devices so that the wireless devices can be packaged in housings of reduced dimensions. Efforts continue to be made to provide for further miniaturization of the device components.

Whether implemented to be operated in a conventional, wired telephonic network, a cellular communication network, or the internet, the telephonic devices typically include transducers that permit speech information to be converted into electrical form and to convert received information, into audio form. An annunciator, such as a ring-tone generator, is utilized to alert a terminating call at the device. Two-way communication is provided to carry out conventional, two-way conversations, or the like.

A telephonic device is sometimes constructed to permit the device to be operated in a hands free mode in which the device need not be positioned in close proximity to the user of the device in order for the telephonic communications to be carried out. To provide for operation in the hands free mode, the volumetric level of the audio generated by the device is great enough to permit the device to be positioned away from the user, permitting the user to hear the received audio. When implemented at a portable, wireless device, hands-free operability is typically provided by a second acoustic transducer, separate from the handset receiver that is used when the device is not utilized in a hands-free mode.

The use of a separate receiver and hands-free transducer requires additional space and is contrary to the ongoing efforts to miniaturize the wireless device. By utilizing a separate hands-free transducer, positioned away from an earpiece portion of the device, a user does not hear inappropriately or injuriously loud audio if the user positions the handset proximate to the user's car. However, the use of the hands-free transducer is at the cost of increased part count and cost and is contrary to size minimization. Position sensing elements are sometimes utilized at a telephonic device, but such elements are conventionally utilized to control powering of a device display.

It is in light of this background information related to telephonic devices that the significant improvements of the present disclosure have evolved.

### Brief Description of the Drawings

Figure 1 illustrates a functional block diagram of a radio communication system in which an implementation of the present disclosure forms a portion,

Figure 2 illustrates a graphical representation showing the relationship between distance and volumetric output level of a receiver pursuant to an exemplary implementation of the present disclosure.

Figure 3 illustrates a functional block diagram of a portion of a handset of an implementation of the present invention.

Figure 4 illustrates a functional block diagram of a symmetry determiner that forms a portion of an implementation of the present disclosure.

Figure 5 illustrates a process diagram representative of the process of operation of an implementation of the present disclosure.

### Detailed Description

The present disclosure, accordingly, advantageously provides an apparatus, and an associated method, by which to select the volumetric output level of a handset receiver such as the receiver transducer of the wireless device.

Through operation of an implementation of the present disclosure, a manner is provided by which to operate the handset receiver in either a handset mode or a hands free mode, depending upon the position of the handset relative to the user of the handset.

In one aspect of the present disclosure, the volumetric output level of the receiver is constrained when the user is positioned in proximity to the handset, such as when the handset is positioned close to the ear of the user. When the user is not positioned in proximity to the handset, the handset is permitted to be operated in the hands free mode, permitting the volumetric output level to be greater than when in the handset mode.

In another aspect of the present disclosure, the capacitive, or other noncontact, sensing is utilized to sense proximity to a user. A capacitor or capacitive sensor forming part of a sensing circuit exhibits a capacitance that is dependent upon proximity to an object, such as a side of a user's face when the user positions the handset to carry out a telephonic communication. In such position, the ear piece, and a handset receiver positioned therein, of the handset is positioned proximate to the ear of the user and the mouth piece of the handset in proximity to the mouth of the user. The capacitance of the capacitive element or capacitive sensor of a capacitive sensing circuit is of a value that changes depending upon the proximity of the capacitive element relative to the face of the user. Other noncontact sensors are analogously operable.

In another aspect of the present disclosure, when the sensed indication indicates that the handset is in proximity to the user, the maximum volumetric output level of the receiver of the handset is constrained. By constraining the maximum output level of the receiver, audio output of their receiver is controlled to prevent the audio output to be of a level that would be considered to be excessively loud to a user when the receiver is positioned in proximity to the ear of the user.

In another aspect of the present disclosure, when the sensed proximity provided by the noncontact sensor indicates that the handset is positioned at a lessened proximity to, or not in proximity to, the user, the volumetric output permitted of audio signals generated by the receiver is less constrained, and the audio output is permitted to be significantly higher. When positioned out of proximity to the user, the audio level permitted of the receiver is great enough to permit hands free operation of the handset.

In another aspect of the present disclosure, the audio output level of audio signals generated by the handset receiver change, such as in a proportional manner, depending upon the sensed proximity of the handset to the user. In one implementation, both values provided by a noncontact sensor and by an accelerometer are utilized. When the handset is determined to be at least greater than a minimum distance from the user, the maximum output level of the audio signal of the receiver is permitted to increase. As the sensed distance of the handset from the user increases, the volumetric output level is permitted to increase. As the sensed distance increases, the volumetric output level is permitted to increase until the sensed distance is at least a second minimum distance from the user. When at least the second minimum distance from the user, the volumetric output level is permitted to reach a hands-free volumetric level, selected to be of a level permitting hands free operation of the handset. In this implementation, when the sensed distance is at least the first and minimum distance, the audio mode of operation of the handset is switched out of a handset mode and into a hands free mode of operation. The volumetric output level of the receiver is permitted to increase, e.g., proportionally relative to the increase in distance beyond the minimum distance until the distance increases to position the handset in a full hands free mode at which the volumetric output level of the handset receiver is permitted to be at a full hands free volumetric level.

In another aspect of the present disclosure, the sensed proximity indication is also used to control the powering of a handset display screen. When the sensed indication indicates that the handset is in close proximity with the user, e.g., is positioned against the face of the user to be operated in a handset mode of operation, the display element is caused not to be powered. And, when the sensed indication indicates that the handset is positioned at least a minimum distance away from the user, then the display element is caused to be powered. The same capacitive, or other noncontact, sensor element or circuit is used in both the control of the volumetric output level of the handset receiver and also the powering of the display element of the handset.

In another aspect of the present disclosure, an indicator is provided to provide a user with an indication in human perceptible form of a mode in which the handset is operated. The indication comprises, e.g., a visual indication displayed on a handset display screen, lighting of an LED indicator light that is associated with one of the other of the operational modes, an audio indicator that generates a tone or other audible sound, such as when the mode changes, or a vibratory alert that indicates a mode change. In an implementation in which a visual indication is provided, distinct contrast or color profiles, e.g., are utilized to provide for easy identification of transition between the operational modes by a mere glance at the display.

In another aspect of the present disclosure, a single acoustic transducer, the handset receiver, is used for handset-mode operation of the handset and also hands free-mode operation of the handset. Constraints on maximum volumetric output of the receiver is provided so that the audio level of audio signals generated by the receiver are not excessively loud when the handset is positioned in proximity to the user while also obviating the conventional need to utilize two separate acoustic transducers for the separate modes of operation.

In these and other aspects, therefore, an apparatus, and an associated method, is provided for facilitating operation of a handset having a receiver. A proximity determiner is configured to determine a sensed proximity indication. A selector is configured to select at which of a first volume metric output level and at least a second volumetric output level to operate the receiver responsive to the sensed proximity indication.

In these and other aspects, therefore, further apparatus, and an associated method, is provided for facilitating operation of a handset having a receiver. A sensed proximity of the handset from a user is sensed. Selection is made of a volumetric output level amongst a plurality of volumetric output levels. The volumetric output levels include a minimum volumetric output level up to a first distance from the user, include variably increased output levels up to a second distance from the user, and include a maximum volumetric level at and beyond the second distance from the user greater than the first distance, to operate the receiver responsive to the sensed proximity.

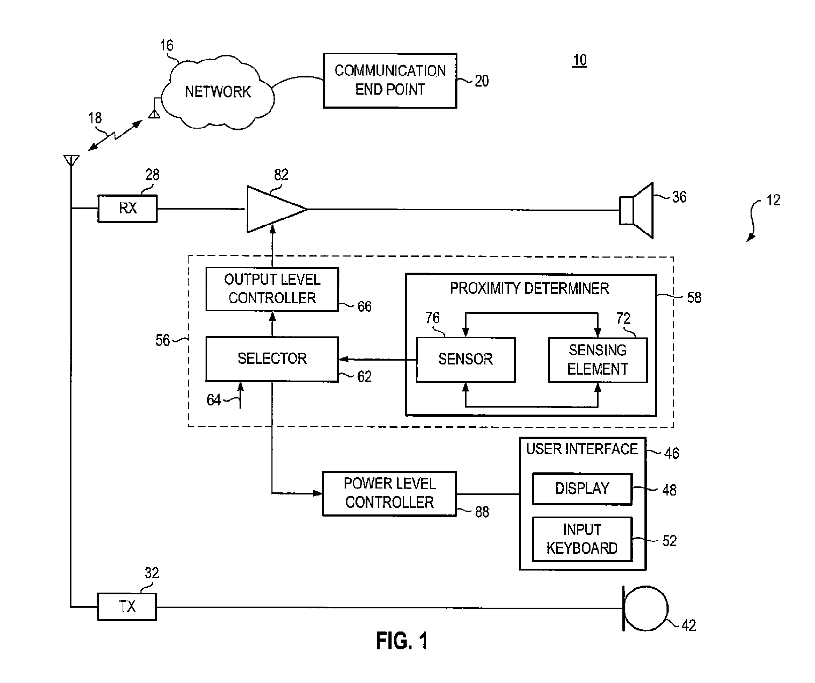

Turning first, therefore, to Figure 1, a communication system 10 provides for communications with communication devices of which the communication device 12 is representative. In the exemplary implementation illustrated in Figure 1, the communication system 10 forms a radio communication system, such as a cellular or cellular-like communication system, that provides for telephonic communication services. More generally, the communication system is representative of any of various types of communication systems that provide for telephonic communication services. That is to say, generally, the communication system 10 is representative of both radio communication systems and wire line communication systems.

The communication system includes a network part 16. Communication channels, here radio channels, indicated by the segment 18, are formed between the network part 16 and the device 12. A communication endpoint (CE) 20 is placed in communication connectivity with the network part 16. The communication endpoint is representative of any of various communication devices that form information sources and destinations. Here, e.g., the communication endpoint is representative of a telephonic station, either a telephonic station connected by way of a wired connection with the network 16 or a radio communication device that provides for telephonic communication services. In the illustrated implementation in which the device 12 forms a wireless device, the device includes radio transceiver circuitry, here represented by receiver circuitry (RX) 28 and a transmitter circuitry (TX) 32. The receiver circuitry 28 provides for reception of signal sent to the device 12 upon radio channels 18. And, communication signals to be sent by the device 12 are caused to be transmitted by the transmitter circuitry 32. The device 12 forms a handset capable of two-way telephonic communication by supporting circuitry of the device at a housing. Signals received at the receiver 28 that are representative of voice information are acted upon the receiver and transduced into acoustic form by an acoustic transducer 36, herein refer to as a receiver or a handset receiver. The handset formed of the device 12 also includes a transducer forming a microphone 42 that converts voice-frequency signals into electrical form, which are applied to the transmitter 32.

A user of the handset positions the handset such that the receiver 36 is positioned proximate to an ear of the user. And, the microphone 42, positioned at a mouth piece portion of the handset is positioned in proximity to the mouth of the user. The user is able thereby to listen to and speak pursuant to a telephonic communication session.

The handset formed of the device 12 also includes a user interface 46 that includes a display element 48 and an input actuator, such as an input keyboard 52. The user interface, in one implementation, comprises a touch screen display in which inputs are entered by way of touching specific portions of the display screen.

The handset formed of the device 12 also includes an apparatus 56 of an implementation of the present disclosure. The apparatus 56 is utilized to cause the volumetric output level of the receiver 36 to be of selected magnitudes. The volumetric output level is caused to be of a level to permit the handsets to be operated in a handset mode of operation and in a hands free mode operation. The volumetric output level of the receiver is constrained such that the magnitude of the output level is not permitted to be greater than a handset mode magnitude when the handset is positioned in proximity to the user, such as when the ear piece portion and the receiver are positioned in proximity to an ear of the user. The apparatus is functionally represented, formed of functional elements that are implemented in any desired manner, such as hardware elements, firmware elements, program code executable by processing circuitry, and combinations thereof. Here, the apparatus includes a capacitive proximity determiner 58, a selector 62, and an output level controller 66.

The capacitive proximity determiner includes a noncontact sensor, here a capacitance sensor forming a sensing element 72 that exhibits characteristics that are dependent upon proximity of objects thereto. In another implementation, a different type of sensing element, e.g., an inductive sensing element, is utilized. The sensing element 72 is positioned close to, or at, the ear piece portion of the handset, thereby best to detect proximity of the handset, and the receiver 36 thereof, in proximity to an ear of the user when the handset is to be used in a handset mode pursuant to a telephonic communication session.

The capacitive sensor forming the sensing element 72, or other noncontact sensor, is implemented in any of various manners and, in the exemplary implementation, is capable of sensing the presence of a human body within, e.g., 1-10 centimeters from the sensor. Passive sensing is effective as the human has a different dielectric constant than air and therefore disturbs an electric field created by an antenna arrangement formed at the capacitive sensor that includes a capacitive element. A sensor 76 senses values provided by the sensing element 72 to obtain a proximity indication. In one implementation, the passive sensing is performed by detecting the change in a load attached to an output driver. The change is sensed, for instance, by measuring either a voltage or current level or both voltage and current levels, and determining a change in capacitive mode or the change in the complex impedance. By such sensing, an indication is able to be obtained when the handset is positioned close to the face or ear of the user. And, correspondingly, the sensed indication is different when the handset is positioned elsewhere, such as on a table top. The sensor 76 thereby is able reliably to distinguish between a close coupling between the user and the handset and a loose coupling when the handset is not positioned close to the user.

A value representative of the sensed indication by the sensor 76 is provided to the selector 62. The selector utilizes the value to select in what manner to operate the handset and, specifically, the receiver 36. If the value indicates that the handset is positioned proximate to the user, such as proximate to the ear of the user in which the user plans to utilize the handset in a handset mode of operation, the selector selects to constrain the maximum volumetric output level of the receiver 36. That is to say, the selector selects to prevent the volumetric output level of the receiver 36 from exceeding a first maximum output level, a handset-mode output level. Proper selection of the maximum, handset mode output level insures that the level is not inappropriately or injuriously high. If, conversely, the value provided to the selector indicates that the handset is positioned out-of-proximity to the user, then the maximum volumetric output level of the receiver 36 is not constrained to be no greater than the maximum, handset mode output level. Selection is permitted to be made to permit the volumetric output level of the receiver to be as great as a hands-free mode output level, a level significantly higher than the handset-mode output. The hands free-mode output level is of a level permitting hands free operation of the handset. In an exemplary implementation, an indication on line 64 is also provided to the selector by an accelerometer (not separately shown). The indication provided by the accelerometer also is used by the selector to select the manner in which to operate the handset. The indication provided by the accelerometer, for instance, is indicative of a rate of change of movement of the handset.

The selection made by the selector is provided to the output level controller 66, and the controller exerts control to cause the volumetric output level of the receiver 36 to be of a level corresponding to the selection made by the selector.

In the illustrated implementation, a gain amplifier assembly 82 is utilized to introduce gain upon an input signal provided thereto. The gain amplifier assembly 82, while separately represented in Figure 1, is, in the exemplary implementation, part of the receiver circuitry 28. The controller 66 controls the gain of the amplifier, and the amount of gain is determinative of the volumetric output level of the receiver 36.

Also in the exemplary implementation, the value provided by the sensor 76 to the selector 62 is used by the selector to control powering of the display element 48 of the user interface 46 by way of a power level controller 88. In the exemplary implementation, when the handset is determined to be in proximity to the user, the selector selects to cause the display element not to be powered, and the power level controller 88 causes the display element not to be powered while the handset is in proximity to the user. In another implementation, the user interface 46 includes an indicator is provided to provide a user with an indication in human perceptible form of a mode in which the handset is operated. The indication comprises, e.g., a visual indication displayed on a handset display screen, lighting of an LED indicator light that is associated with one of the other of the operational modes, an audio indicator that generates a tone or other audible sound, such as when the mode changes, or a vibratory alert that indicates a mode change. In an implementation in which a visual indication is provided, distinct contrast or color profiles, e.g., are utilized to provide for easy identification of transition between the operational modes by a mere glance at the display. In one implementation, a transition region is defined at a distance at which the handset is positionable wherein the handset is required to be in the handset mode. When crossing the transition region, the indicator, in one implementation, annunciates the crossover.

In one implementation, the capacitive proximity determiner 58 is configured to provide for capacitive sensing utilizing a transmitter with a constant frequency, with a variable frequency, or with a random frequency using a frequency-hopping, pseudo-random frequency selector or through use of phase shifting of a frequency. A receiver that measures capacitance, the capacitive load, is tuned to the same frequency and aligned in phase. The output of the receiver is low pass-filtered in order to reject noise and to provide a stable output. Power consumption of a capacitive proximity determiner configured in this manner is reduced through appropriate change of the frequency of operation or through change of the duty cycle of the receiver or by changing the voltage of applied to the load.

In another implementation, the capacitive load of the capacitive sensor element 72 is tuned using an inductor of small inductance in order to preserve the energy and thus minimize power consumption. In another implementation, the determiner 58 is implemented in a manner in which the output provides either a logic-level output or an analog output value that is proportional to the capacitive load. Alternately, an analog-to-digital converter (ADC) is utilized to provide a coarse output of the sensed proximity.

In one exemplary implementation, the amplifier 82 is settable at one of at least two gain settings, a low gain setting associated with handset-mode operation and a high gain setting for a hands free-mode of operation. The amplifier in another implementation comprises a combination of a class-D amplifier and a class AB amplifier to provide, alternately, operation in the hands-free mode (loud speaker mode) and handset-mode (receiver mode) operation, respectively. In this, or an analogous, implementation, a hard transition region is defined between the modes. When crossing the hard transition, an indication is provided in human perceptible form to alert a user of the operating mode.

In another implementation, a capacitive sensed indication provided by the capacitive sensing element 72 implemented, e.g., by a capacitive sensing chip, is combined with a base band processor. Both control of the volumetric output level of the receiver 36 and the powering of the display element 48 of the user interface is controlled using the same capacitive, or other noncontact, sensor.

In another implementation, the proximity determiner 58 and the amplifier 82 are implemented as a single element. In one implementation, the capacitive sensor element includes high-voltage protection at the capacitive input terminals of the element. And, in one implementation, the amplifier 82 utilizes a high supply voltage when the handset is operated in the hands free mode of operation and is powered at a lower voltage level when the handset is operated in the handset mode of operation. The ratio of high-to-low supply voltages is, e.g., approximately three, which results in an approximately 10 dB reduction in acoustic output when the handset is operated in the handset mode of operation rather than the hands free mode of operation.

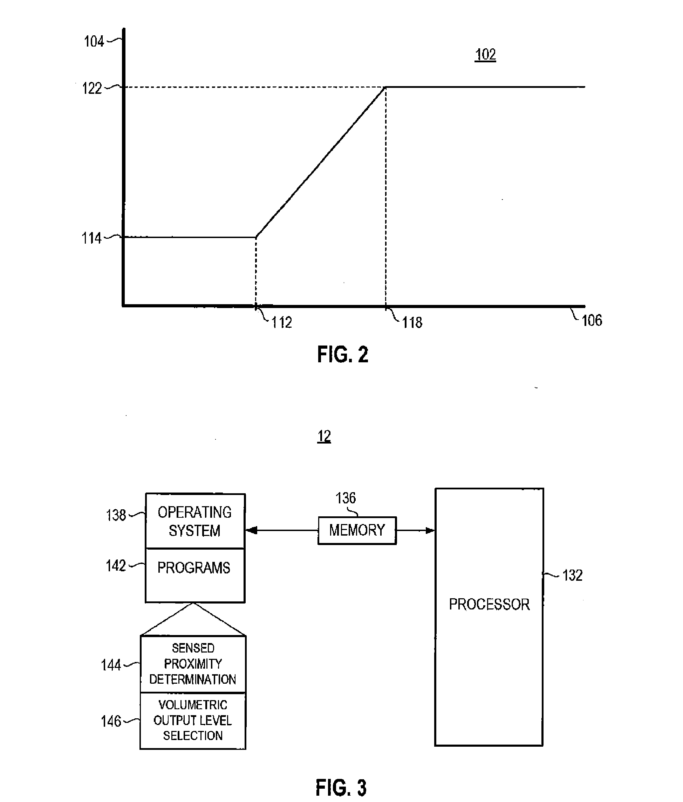

Figure 2 illustrates a graphical representation 102 representative of the relationship between sensed distance and receiver volumetric output levels pursuant to an exemplary implementation of the present disclosure. The volumetric output level is scaled along the Y-axis 104 as a function of distance, scaled along the X-axis 106. When the sensed distance is less than a minimum level, indicated at distance 112, the volumetric output level is constrained to be no greater than a handset-mode maximum level 114. When the distance is greater than the minimum distance 112, the volumetric output level is permitted to increase, herein a linear relationship, with the distance until a second minimum distance 118 is sensed. At the distance 118, or greater, the volumetric output level is permitted to be of a hands free-mode output level 122. Between the sensed distances 112 and 118, the volumetric output level is of a magnitude between the maximum handset-mode level 114 and the hands-free mode level 122. Thereby, a single transducer is used to operate the handset in both a handset mode of operation and a hands free mode of operation while ensuring that, when the handset is positioned in a handset mode of operation, i.e., in proximity to the user, the volumetric output level is constrained so as not to be inappropriately or injuriously high.

Figure 3 illustrates a portion of the handset 12 of an exemplary implementation of the present disclosure. Here, the handset includes a processor 132, which controls overall operation of the handset formed of the communication device 12. The processor 132 accesses data stored at a memory element 136. The data includes an operating system 138 and software programs 142 formed of program code that define algorithms. The operating system 138 and the program 142 are executed by processor 132 during operation of the device 12. The software programs 142 include software modules, here including a sensed capacitive proximity indication determination module 144 and a selection module 146 that selects which of a first volumetric output level and at least a second volumetric output level to operate a handset receiver.

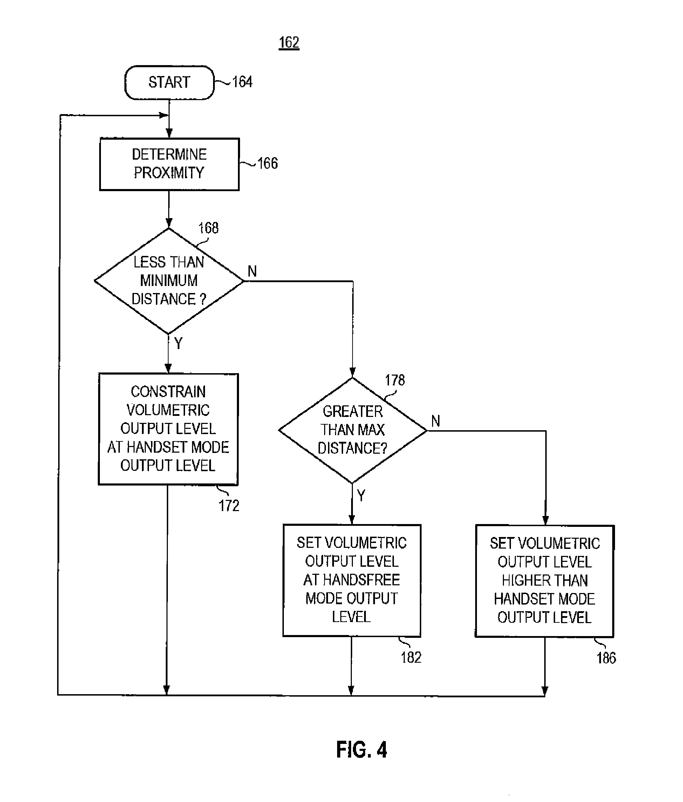

Figure 4 illustrates a process 162 of an exemplary implementation of the present disclosure. The process selects the volumetric output level of a handset receiver.

Subsequent to start indicated at the start block 164, a determination is made of the proximity of the handset to a user, indicated by the block 166. Then, and as indicated at the decision block 168, a determination is made as to whether the proximity is less than a minimum distance. If so, the yes branch is taken to the block 172, and the volumetric output level of the handset receiver is contained to be no greater than a handset mode level. A branch is taken from the block 172 back to the block 166.

If, conversely, the determined proximity is greater than the minimum distance, the no branch is taken to the decision block 178, and a determination is made as to whether the sensed proximity is greater than a maximum distance. If so, the yes branch is taken to the block 182, and the volumetric output level is set to a hands free mode level. A branch is taken from the block 182 back to the block 166.

If, conversely, the sensed proximity is less than the maximum distance, the no branch is taken to the block 186, and the volumetric output level is set at a level incrementally greater, dependent upon the sensed proximity, than the handset mode level. A branch is taken from the block 186 to the block 166.

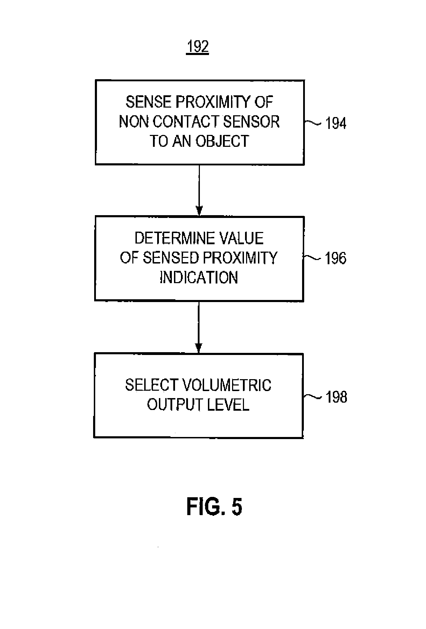

Figure 5 illustrates a method flow diagram 192 of the method of operation of an implementation of the present disclosure. The method facilitates operation of a handset having a receiver operable at a first volumetric output level and at least a second volumetric output level. First, and as indicated by the block 194, a proximity of a noncontact sensor of the handset to an object is sensed. Then, and as indicated by the block 196, a determination is made of a value representative of the sensed noncontact proximity indication. And, as indicated by the block 198, selection is made of which of a first volumetric output level and at least a second volume metric output level to operate the receiver. The handset is thereby able to be rated in either of a handset mode of operation or a hands free mode of operation utilizing a single acoustic-transducing receiver. Constraints on the volumetric output level of the receiver are set in place to insure that the output level is not inappropriately or injuriously high in the event that the handset is positioned in proximity to a user, such as when the handset is positioned to position the receiver of the handset in proximity to an ear of the user.

Presently preferred implementations of the disclosure and many improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for facilitating operation of a handset having a receiver, said apparatus comprising:
a proximity determiner configured to determine a sensed proximity of the handset from a user; and
a selector configured to select a volumetric output level among a plurality of volumetric output levels, the levels including a minimum volumetric output level up to a first distance from the user, variably increasing volumetric output levels up to a second distance from the user, and a maximum volumetric output level at and beyond the second distance from the user greater than the first distance to operate the receiver responsive to the sensed proximity determined by said proximity determiner.

2. The apparatus of claim 1 wherein the handset comprises a user interface and wherein the sensed proximity determined by said proximity determiner is further utilized to control the user interface.

3. The apparatus of any of claims 1 - 2 further comprising a controller configured to control operation of the receiver at the minimum volumetric output level up to the first distance from the user, variably increasing volumetric output levels up to the second distance from the user, and the maximum volumetric output level at and beyond the second distance from the user greater than the first distance.

4. The apparatus of any of claims 1 - 3 wherein the minimum volumetric output level comprises a maximum handset mode volume level, and wherein the maximum volumetric output level comprises a maximum hands free mode volume level.

5. The apparatus of any of claims 1 - 4 wherein said selector is configured to select a volumetric output level proportional to the sensed proximity determined by said proximity determiner.

6. The apparatus of any of claims 1 - 5 wherein the handset further comprises a display and wherein said selector is further configured to select a display power level responsive to the sensed proximity indication determined by said proximity determiner.

7. The apparatus of any of claims 1- 6 further comprising a display and a graphical user interface, and the graphical user interface is configured to visually display a mode of operation based on the sensed proximity.

8. The apparatus of any of claims 1 - 7 wherein the handset further comprises a receiver gain amplifier and wherein said selector is configured to select a gain level of the receiver gain amplifier responsive to the sensed proximity determined by said proximity determiner.

9. A method for facilitating operation of a handset having a receiver, said method comprising:
determining a value representative of a sensed proximity of the handset from a user through a noncontact sensor positioned at the handset; and
selecting a volumetric output level among a plurality of volumetric output levels, the levels including a minimum volumetric output level up to a first distance from the user, variably increasing output levels up to a second distance from the user, and a maximum volumetric output level at and beyond the second distance from the user greater than the first distance to operate the receiver responsive to the sensed proximity.

10. The method of claim 9 further comprising operating the receiver at a volumetric output level corresponding to a selected volumetric output level.

11. The method of any of claims 9 - 10 wherein said determining, selecting, and operating steps are iteratively performed.

12. The method of any of claims 9 - 11 wherein the minimum volumetric output level comprises a maximum handset mode volume level, and wherein the maximum volumetric output level comprises a maximum hands free mode volume level.

13. The method of any of claims 9 - 12 wherein the handset further comprises a display and wherein said method further comprises selecting a display power level responsive to the value determined during said determining step.

14. The method of any of claims 9 - 13 wherein the handset comprises a receiver gain amplifier and wherein said method further comprises selecting a gain level of the receiver gain amplifier responsive to the value determined during said determining step.

15. The method of any of claims 9 - 14 wherein the receiver and the noncontact sensor are positioned at an earpiece of the handset and wherein said determining step comprises determining facial proximity to the earpiece of the hand set,
